# EUROPEAN PATENT APPLICATION

(11) **EP 4 486 055 A1**
(43) Date of publication of application: **01.01.2025**
(21) Application number: 24183617.0
(22) Date of filing: 21.06.2024
(51) Int. Cl.: H04W 84/12, H04W 36/08

(54) **ELECTRONIC DEVICE, CONTROL METHOD THEREOF, PROGRAM, AND STORAGE MEDIUM STORING PROGRAM**

(30) Priority: 30.06.2023 JP 2023108519
(71) Applicant: CANON KABUSHIKI KAISHA, Tokyo 146-8501 (JP)
(72) Inventor: NAGAHARA, Ryuji, Tokyo, 146-8501 (JP)
(74) Representative: TBK

(57) **Abstract**

An electronic device includes: reception means that receives a change request of an access point serving as a connection destination from a connected first access point; and control means that controls, in a case where the electronic device is in a first mode, out of the first mode and a second mode in which a clock frequency of the at least one processor is lower than in the first mode, to perform connection destination change processing based on the change request, and in a case where the electronic device is in the second mode, not to perform the connection destination change processing based on the change request.

## Description

### BACKGROUND OF THE INVENTION

### Field of the Invention

The present invention relates to an electronic device connectable by a wireless local area network (LAN), a control method thereof, a program, and a storage medium storing a program.

### Description of the Related Art

There is a technique of dynamically switching a connection destination AP in order to efficiently exchange data between an Access Point (AP) and a Station (STA) in an Extended Service Set (ESS) constituted by a plurality of APs. If it is determined to switch the connection destination AP based on the degree of congestion of an AP to which a STA connects, the availability of other APs, the radio wave status, and the like, the connected AP transmits a connection AP change request to the STA. Upon receiving the AP change request, the STA can switch the connection destination AP in accordance with the request and connect to a proper AP.

Japanese Patent Laid-Open No. 2021-175068 discloses the following processing as processing of requesting a change of a connection destination from a router having an AP function, of a connected wireless slave device. A mobile router (MR1) connectable to a plurality of wireless slave devices checks whether a wireless slave terminal complies with IEEE 802.11v. Whether a wireless slave terminal complies with IEEE 802.11v can be determined from an Association Request frame transmitted when the wireless slave terminal wirelessly connects to the MR1. When the wireless slave terminal complies with IEEE802.11v, the MR1 transmits a BSS Transition Management (BTM) Request frame to the wireless slave terminal. The BSS Transition Candidate List Entries field of the BTM Request frame designates the BSSID of a master router RT2 as a connection destination. This prompts switching of the connection destination of the wireless slave terminal, and the wireless slave terminal switches the connection destination from the MR1 to the RT2 in accordance with the received BTM Request frame.

### SUMMARY OF THE INVENTION

The present invention provides an electronic device that more properly performs change of an access point serving as a connection destination, a control method thereof, a program, and a storage medium storing a program.

The present invention in its first aspect provides an electronic device as specified in claims 1 to 19. The present invention in its second aspect provides an electronic device control method as specified in claim 20. The present invention in its third aspect provides a program as specified in claim 21. The present invention in its fourth aspect provides a non-transitory computer-readable storage medium as specified in claim 22.

According to the present invention, change of an access point serving as a connection destination can be performed more properly.

Further features of the present invention will become apparent from the following description of exemplary embodiments with reference to the attached drawings.

### BRIEF DESCRIPTION OF THE DRAWINGS

Fig. 1 is a view showing a system configuration.
Figs. 2A and 2B are views showing the arrangement of a MFP.
Figs. 3A to 3C are views showing the operation display unit of the MFP.
Figs. 4A and 4B are views showing the arrangement of a mobile terminal device.
Fig. 5 is a block diagram showing the arrangement of an access point.
Fig. 6 is a sequence chart for explaining processing corresponding to a connection destination change request from an AP.
Fig. 7 is a flowchart showing processing in the MFP.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

A STA takes a state in which no problem occurs even upon switching an AP, and a state in which a problem occurs upon switching an AP or disconnection from a connected AP. If the STA receives an AP change request from the AP and switches the connection destination AP in accordance with the request in the state in which a problem occurs, a problem occurs in the STA.

According to the present disclosure, change of an access point serving as a connection destination can be performed more properly.

### (System Configuration)

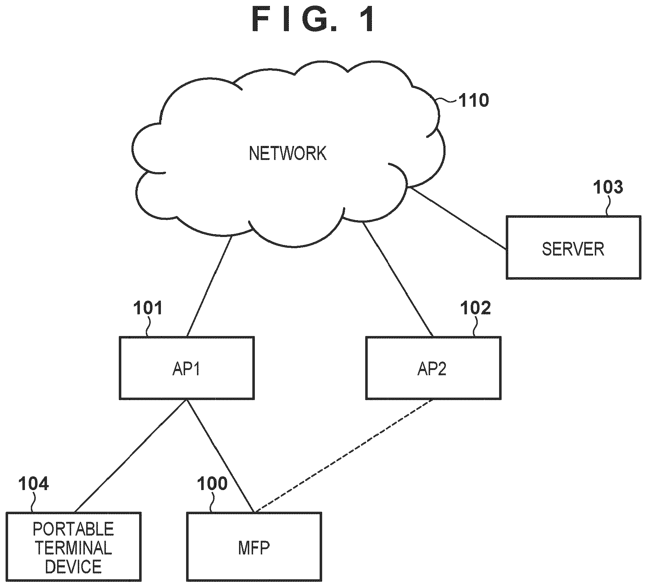

Fig. 1 shows an example of the configuration of a system according to the embodiment. In an example, the system is a wireless communication system in which a plurality of communication apparatuses can communicate with each other wirelessly. In the example of Fig. 1, the system includes a mobile terminal device 104 and a MFP 100 as communication apparatuses, APs 101 and 102 as access points, a server 103, and a network 110. Note that the APs 101 and 102 are sometimes referred to as AP1 and AP2. The mobile terminal device 104 is a device having a wireless communication function by a wireless LAN or the like. Note that the wireless LAN is sometimes referred to as WLAN. The mobile terminal device 104 can be a personal information terminal, such as a Personal Digital Assistant (PDA), a mobile phone (smartphone), a digital camera, a personal computer, or the like.

The MFP 100 is a printing apparatus having a printing function, and may further have a reading function (scanner), a FAX function, and a telephone function. The MFP 100 according to the embodiment has a communication function capable of wirelessly communicating with the mobile terminal device 104. A case where the MFP 100 is used will be exemplified in the embodiment, but some embodiments are not limited to this. For example, a scanner, a projector, a mobile terminal, a smartphone, a notebook PC, a tablet terminal, a PDA, a digital camera, a music player, a television, or a smart speaker having a communication function may be used instead of the MFP 100. Note that the MFP is an acronym for Multi Function Peripheral.

The AP 101 is provided separately from (outside) the mobile terminal device 104 and the MFP 100, and functions as a WLAN base station apparatus. A communication apparatus having a WLAN communication function can communicate in a WLAN infrastructure mode via the AP 101. Note that the access point is sometimes referred to as "AP". The infrastructure mode is sometimes referred to as "wireless infrastructure mode". The AP 101 performs wireless communication with a communication apparatus for which the AP 101 permits (authenticates) connection to the AP 101, and relays wireless communication between the communication apparatus and another communication apparatus. The AP 101 is connected to, for example, a wired communication network, and can relay communication between a communication apparatus connected to the wired communication network and another communication apparatus wirelessly connected to the AP 101.

The AP 102 has a function equivalent to that of the AP 101, and the MFP 100 switches the connection from the AP 101 to the AP 102, as needed. The server 103 connects to the MFP 100 via the AP 101 and the network 110, and provides services to the MFP 100 in response to a request from the MFP 100. The network 110 may be the so-called Internet, or a closed office network or a mobile phone network.

### (Outer Appearance Arrangement of MFP)

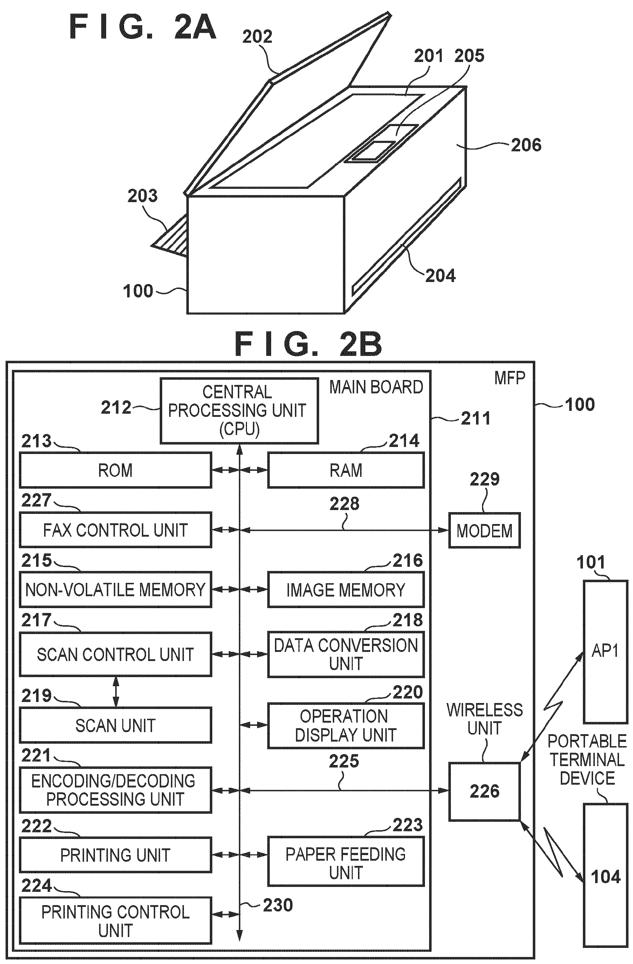

Fig. 2A shows an example of the outer appearance arrangement of the MFP 100. The MFP 100 includes, for example, a document table 201, a document cover 202, a print sheet insertion port 203, a print sheet discharge port 204, and an operation display unit 205. The document table 201 is a table on which a document to be read is placed. The document cover 202 is a cover that presses a document on the document table 201 and prevents outward leakage of light from a light source irradiating the document at the time of reading. The print sheet insertion port 203 is an insertion port capable of setting sheets of various sizes. The print sheet discharge port 204 is a discharge port from which a sheet upon printing is discharged. Sheets set at the print sheet insertion port 203 are conveyed one by one to a printing unit, and after printing by the printing unit, discharged from the print sheet discharge port 204. The operation display unit 205 includes keys, such as character input keys, cursor keys, an OK key, and a cancel key, an LED, and an LCD. The operation display unit 205 can accept activation of various functions of the MFP 100 and operation of various settings by the user. The operation display unit 205 may include a touch panel display. The MFP 100 has a WLAN wireless communication function, and includes a wireless communication antenna 206 for the wireless communication that need not always be visible from the outer appearance. Similar to the mobile terminal device 104, the MFP 100 can perform wireless communication in the 2.4- and 5-GHz frequency bands by the WLAN.

### (Arrangement of MFP)

Fig. 2B shows an example of the arrangement of the MFP 100. The MFP 100 includes a main board 211 that performs main control of the MFP 100, and a wireless unit 226 serving as one communication module that performs WLAN communication using at least one common antenna. The MFP 100 includes a modem 229 for performing, for example, wired communication. The main board 211 includes, for example, a central processing unit (CPU) 212, a ROM 213, a RAM 214, a nonvolatile memory 215, an image memory 216, a reading control unit 217, a data conversion unit 218, a reading unit 219, and an encoding/decoding processing unit 221. The main board 211 includes, for example, a printing unit 222, a sheet feeding unit 223, a printing control unit 224, and an operation display unit 220. The functional units in the main board 211 are connected to each other via a system bus 230 managed by the CPU 212. The main board 211 and the wireless unit 226 are connected via, for example, a dedicated bus 225, and the main board 211 and the modem 229 are connected via, for example, a bus 228.

The CPU 212 is a system control unit including at least one processor, and controls the overall MFP 100. In an example, processing of the MFP 100 to be described below is implemented by executing a program stored in the ROM 213 by the CPU 212. Note that hardware dedicated to each processing may be prepared. The ROM 213 stores control programs to be executed by the CPU 212, an embedded OS program, and the like. In the embodiment, the CPU 212 executes each control program stored in the ROM 213 under the management of the embedded OS similarly stored in the ROM 213, thereby performing software control, such as scheduling or task switching.

The RAM 214 is constituted by a SRAM or the like. The RAM 214 stores data such as program control variables, and data such as set values registered by the user and management data, of the MFP 100. The RAM 214 can be used as a buffer for various works. The nonvolatile memory 215 is constituted by a memory, such as a flash memory, and keeps storing data even after the MFP 100 is turned off. The image memory 216 is constituted by a memory, such as a DRAM. The image memory 216 accumulates image data received via the wireless unit 226, image data processed by the encoding/decoding processing unit 221, and the like. Note that the memory configuration of the MFP 100 is not limited to the above-described one. The data conversion unit 218 performs analysis of data of various forms, conversion from image data into print data, and the like.

The reading control unit 217 controls the reading unit 219 (for example, a contact image sensor (CIS)) to optically read a document on the document table 201. The reading control unit 217 converts an image obtained by optically reading the document into electrical image data (image signal), and outputs the image data. At this time, the reading control unit 217 may output image data after performing various image processes, such as binarization processing and halftone processing.

The operation display unit 220 is the operation display unit 205 described with reference to Fig. 2A, and executes display on a display based on display control by the CPU 212, generation of a signal in response to acceptance of a user operation, and the like.

The encoding/decoding processing unit 221 performs encoding processing, decoding processing, and scaling processing on image data (JPEG, PNG, and the like) handled by the MFP 100.

The sheet feeding unit 223 holds sheets for printing. The sheet feeding unit 223 can supply a set sheet under the control of the printing control unit 224. The sheet feeding unit 223 may include a plurality of sheet feeding portions in order to hold sheets of a plurality of types, and can control which sheet feeding portion feeds a sheet under the control of the printing control unit 224.

The printing control unit 224 performs various image processes, such as smoothing processing, print density correction processing, and color correction, on image data to be printed, and outputs the processed image data to the printing unit 222. The printing unit 222 is constituted to be able to execute printing processing by, for example, the inkjet printing method. The printing unit 222 discharges, from a printhead, ink supplied from an ink tank, and prints an image on a print medium, such as a sheet. Note that the printing unit 222 may be constituted to be able to execute another printing processing by the electrophotographic method or the like. The printing control unit 224 can periodically read out information of the printing unit 222, and update status information and the like that are stored in the RAM 214 and include the remaining amount of the ink tank, the state of the printhead, and the like.

The wireless unit 226 is a unit capable of providing the WLAN communication function, and can provide, for example, a function similar to a combination of a WLAN unit 429 of the mobile terminal device 104. That is, the wireless unit 226 converts data into a packet in accordance with the WLAN standard, and transmits the packet to another device. In addition, the wireless unit 226 restores original data from a packet from another external device, and outputs the data to the CPU 212. The wireless unit 226 can communicate as a station compliant with the IEEE802.11 standard series. In particular, the wireless unit 226 can communicate as a station compliant with IEEE802.11a/b/g/n/ac/ax. The station is sometimes referred to as a STA. The wireless unit 226 can also communicate as a STA compliant with Wi-Fi Agile Multiband^{™}.

The wireless unit 226 complies with IEEE802.11ax, that is, Wi-Fi6^{™}, and the MFP 100 can operate even as a STA compliant with at least either of Orthogonal Frequency-Division Multiple Access (OFDMA) and Target Wake Time (TWT). Since the MFP 100 complies with TWT, the timing of data communication from a master device to a STA is adjusted. The wireless unit 226 (MFP 100) as the STA shifts the communication function to a sleep state when it need not wait for signal reception. This can suppress power consumption. The wireless unit 226 also complies with Wi-Fi 6E^{™}. That is, the wireless unit 226 can communicate even in the 6-GHz band (5.925 GHz to 7.125 GHz). A target band present in the 5-GHz band in which Dynamic Frequency Selection (DFS) is performed does not exist in the 6-GHz band. In the 6-GHz band communication, therefore, a communication disconnection caused by the DFS standby time does not occur, and a more comfortable communication can be expected.

Note that the mobile terminal device 104 and the MFP 100 can perform WFD-based P2P (WLAN) communication, and the wireless unit 226 has a software access point (soft AP) function or a group owner function. That is, the wireless unit 226 can construct a P2P communication network and decide a channel used in P2P communication.

### (Operation Display Unit of MFP)

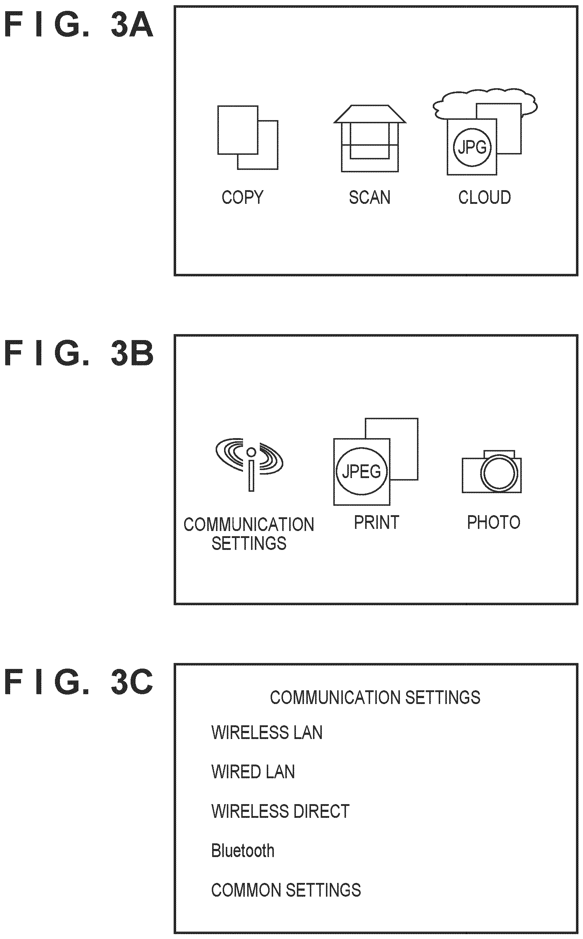

Figs. 3A to 3C schematically show an example of a screen display on a display (touch panel display) included in the operation display unit 220 of the MFP 100. Fig. 3A shows an example of a home screen displayed during a state (idle state or Standby state) in which the MFP 100 is turned on and an operation such as printing or scanning is not performed. In Fig. 3A, display items (menu items) corresponding to copy, scan, cloud are displayed. Cloud is a menu item regarding a cloud function using Internet communication. When any menu item is selected by a key operation or a touch panel operation, the MFP 100 can start executing a corresponding setting or function. The MFP 100 can seamlessly display a screen different from one in Fig. 3A by accepting a key operation or a touch panel operation on the home screen in Fig. 3A.

Fig. 3B shows a display example of another portion of the home screen. This screen is shifted from the state in Fig. 3A by an operation (for example, a slide operation to left or right) of displaying another page of the home screen. In Fig. 3B, display items (menu items) corresponding to communication settings, print, and photo are displayed. When any menu item is selected, a function corresponding to the selected menu item, that is, any of the printing function, photo function, and communication settings is executed.

Fig. 3C shows a display example of the menu screen of the communication settings displayed when communication settings is selected on the screen in Fig. 3B. The menu screen of communication settings displays menu items (choices) "wireless LAN", "wired LAN", "wireless direct", "Bluetooth", and "common". "Wireless LAN", "wired LAN", and "wireless direct" are menu items for performing LAN setting. From these items, settings such as setting of wired connection, valid/invalid setting of the wireless infrastructure mode, and valid/invalid setting of the P2P mode such as WFD or soft AP mode can be performed. When the item "wireless LAN" is selected and the wireless LAN is set valid by a user operation, the wireless infrastructure mode becomes valid. When the item "wireless direct" is selected and the wireless direct is set valid by a user operation, the P2P (WLAN) mode becomes valid. On this screen, a common setting menu regarding various connection forms is also displayed. The user can perform, from this screen, setting of the frequency band and frequency channel of the wireless LAN, and the like.

### (Outer Appearance Arrangement of Mobile Terminal Device)

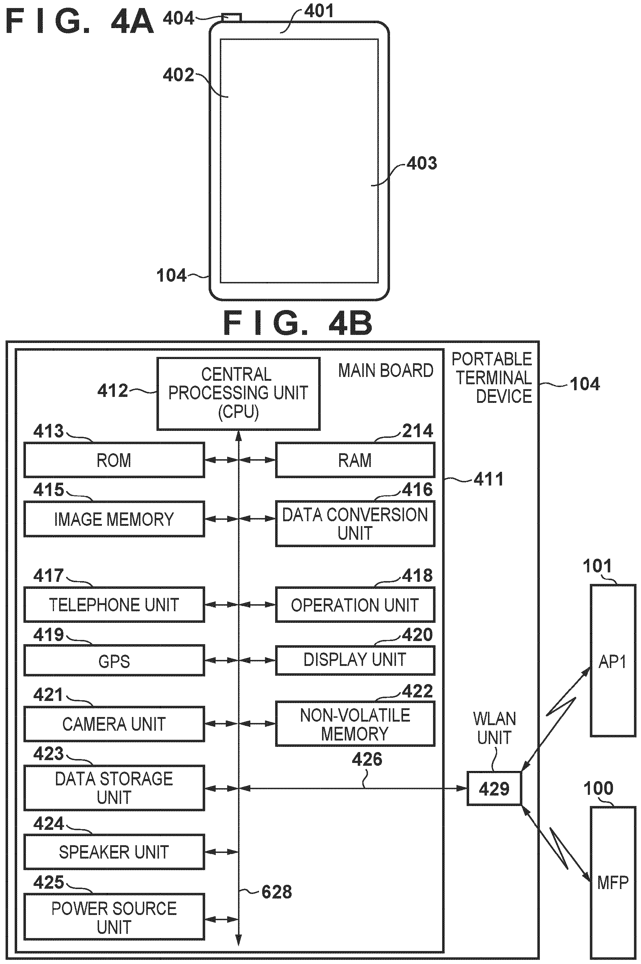

Fig. 4A is a view showing an example of the outer appearance arrangement of the mobile terminal device 104. In the embodiment, a case where the mobile terminal device 104 is a smartphone of a general form will be exemplified. Note that the mobile terminal device 104 includes, for example, a display unit 402, an operation unit 403, and a power key 404. The display unit 402 is, for example, a display including a Liquid Crystal Display (LCD) type display mechanism. Note that the display unit 402 may display information using a Light Emitting Diode (LED) or the like. The mobile terminal device 104 may have a function of outputting information by sound, in addition to or instead of the display unit 402. The operation unit 403 includes physical keys, such as keys and buttons, a touch panel, and the like for detecting a user operation. Note that in this example, information display on the display unit 402 and acceptance of a user operation by the operation unit 403 are performed using a common touch panel display, and the display unit 402 and the operation unit 403 are implemented by one device. In this case, for example, button icons and a software keyboard are displayed using the display function of the display unit 402, and touches of these portions by the user are detected by the operation acceptance function of the operation unit 403. Note that it is also possible to separate the display unit 402 and the operation unit 403, and separately prepare display hardware and operation acceptance hardware. The power key 404 is a physical key for accepting a user operation of turning on or off the mobile terminal device 104.

The mobile terminal device 104 includes a WLAN unit 401 that provides the WLAN communication function though it need not always be visible from the outer appearance. The WLAN unit 401 is constituted to be able to execute data (packet) communication in a WLAN system compliant with, for example, the IEEE802.11 standard series (for example, IEEE802.11a/b/g/n/ac/ax). The WLAN unit 401 can communicate as an AP compliant with Wi-Fi Agile Multiband^{™}. However, the WLAN unit 401 is not limited to this, and may be able to execute communication of a WLAN system compliant with another standard. Note that this example assumes that the WLAN unit 401 can communicate in both the 2.4- and 5-GHz frequency bands. Also, the WLAN unit 401 can execute WFD-based communication, communication in the soft AP mode, communication in the wireless infrastructure mode, and the like. Operations in these modes will be described later.

### (Arrangement of Mobile Terminal Device)

Fig. 4B shows an example of the arrangement of the mobile terminal device 104. In an example, the mobile terminal device 104 includes a main board 411 that performs main control of the mobile terminal device 104, and a WLAN unit 429 that performs WLAN communication. The main board 411 includes, for example, a CPU 412, a ROM 413, a RAM 414, an image memory 415, a data conversion unit 416, a telephone unit 417, a GPS 419, a camera unit 421, a nonvolatile memory 422, a data accumulation unit 423, a loudspeaker unit 424, and a power supply unit 425. The CPU is an acronym for Central Processing Unit, the ROM is an acronym for Read Only Memory, the RAM is an acronym for Random Access Memory, and the GPS is an acronym for Global Positioning System. The mobile terminal device 104 also includes a display unit 420 and an operation unit 418. The functional units in the main board 411 are connected to each other via a system bus 628 managed by the CPU 412. The main board 411 and the WLAN unit 429 are connected via, for example, a dedicated bus 426.

The CPU 412 is a system control unit including at least one processor, and controls the overall mobile terminal device 104. In an example, processing of the mobile terminal device 104 to be described below is implemented by executing a program stored in the ROM 413 by the CPU 412. Note that hardware dedicated to each processing may be prepared. The ROM 413 stores control programs to be executed by the CPU 412, an embedded operating system (OS) program, and the like. In the embodiment, the CPU 412 executes each control program stored in the ROM 413 under the management of the embedded OS similarly stored in the ROM 413, thereby performing software control, such as scheduling or task switching.

The RAM 414 is constituted by a Static RAM (SRAM) or the like. The RAM 414 stores data such as program control variables, and data such as set values registered by the user and management data of the mobile terminal device 104. The RAM 414 can be used as a buffer for various works. The image memory 415 is constituted by a memory, such as a Dynamic RAM (DRAM). The image memory 415 temporarily stores image data received via the WLAN unit 429, and image data read out from the data accumulation unit 423, in order to process the data by the CPU 412. The nonvolatile memory 422 is constituted by a memory, such as a flash memory, and keeps storing data even after the mobile terminal device 104 is turned off. Note that the memory configuration of the mobile terminal device 104 is not limited to the above-described one. For example, the image memory 415 and the RAM 414 may be shared, or the data accumulation unit 423 may be used to perform backup of data or the like. The DRAM is exemplified as the image memory 415 in the embodiment, but another storage medium, such as a hard disk or a nonvolatile memory may be used.

The data conversion unit 416 performs analysis of data of various forms, and data conversion, such as color conversion or image conversion. The telephone unit 417 controls a telephone line, and processes audio data input/output via the loudspeaker unit 424, thereby implementing telephone communication. The GPS 419 receives radio waves sent from a satellite and obtains position information, such as the current latitude and longitude of the mobile terminal device 104.

The camera unit 421 has a function of electronically recording an image input via a lens and encoding it. Image data obtained by image capturing by the camera unit 421 is saved in the data accumulation unit 423. The loudspeaker unit 424 performs control for implementing a function of inputting or outputting voice for the telephone function, and a function, such as alarm notification. The power supply unit 425 is, for example, a portable battery and performs power supply control into the device. The power supply state includes, for example, a battery exhaustion state in which the battery runs out, a power off state in which the power key 404 is not pressed, an active state in which the mobile terminal device 104 is normally activated, and a power saving state in which the mobile terminal device 104 is activated but power is saved.

The display unit 420 is the display unit 402 described with reference to Fig. 4A, and displays various input operations, the operation state of the MFP 100, the status state, and the like based on the control of the CPU 412. The operation unit 418 is the operation unit 403 described with reference to Fig. 4A, and executes control of, upon accepting a user operation, generating an electrical signal corresponding to the operation and outputting it to the CPU 412.

The mobile terminal device 104 performs wireless communication with the WLAN unit 429, and performs data communication with another device such as the MFP 100. The WLAN unit 429 converts data into a packet, and transmits the packet to another device. In addition, the WLAN unit 429 restores original data from a packet from another external device, and outputs the data to the CPU 412. The WLAN unit 429 is a unit for implementing communication compliant with the WLAN standard. The WLAN unit 429 can operate concurrently in at least two communication modes including the wireless infrastructure mode and the P2P (WLAN) mode. Note that frequency bands used in these communication modes can be restricted by the hardware functions and performance.

### (Arrangement of Access Point)

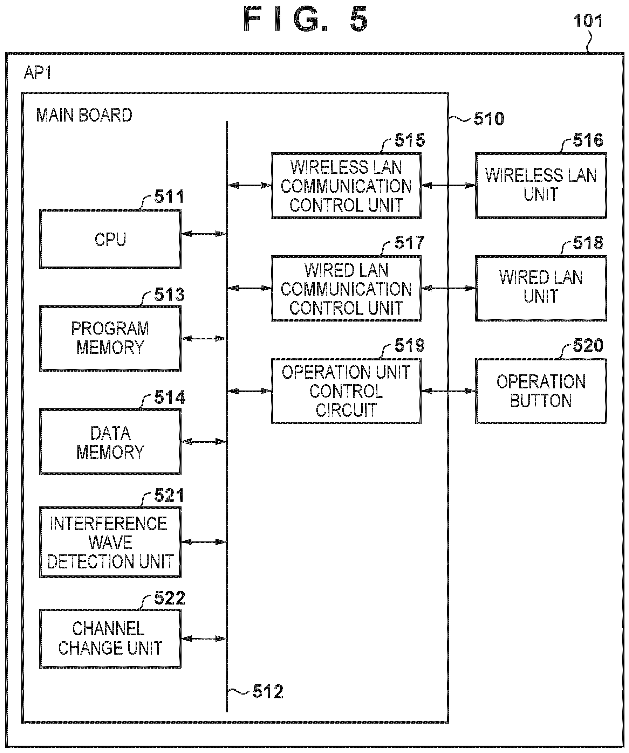

Fig. 5 is a block diagram showing the arrangement of the AP 101 having a wireless LAN access point function. The AP 101 includes a main board 510 that controls the AP 101, a wireless LAN unit 516, a wired LAN unit 518, and an operation button 520.

A CPU 511 in the form of a microprocessor arranged on the main board 510 operates in accordance with a control program stored in a program memory 513 in the form of a ROM connected via an internal bus 512, and the contents of a data memory 514 in the form of a RAM. The CPU 511 performs wireless LAN communication with another communication terminal apparatus by controlling the wireless LAN unit 516 via a wireless LAN communication control unit 515. The CPU 511 performs wired LAN communication with another communication terminal apparatus by controlling the wired LAN unit 518 via a wired LAN communication control unit 517. The CPU 511 can accept an operation from the user via the operation button 520 by controlling an operation unit control circuit 519. The CPU 511 includes at least one processor.

The AP 101 also includes an interference wave detection unit 521 and a channel change unit 522. The interference wave detection unit 521 performs interference wave detection processing when wireless communication is executed in a band in which Dynamic Frequency Selection (DFS) is executed. When an interference wave is detected while wireless communication is executed in the band in which DFS is executed, the channel change unit 522 performs change processing of a channel used in a case where the channel has to be immediately changed to a free channel.

Note that the AP 102 also has an arrangement similar to that of the AP 101.

### (P2P Communication Method)

Next, a P2P (WLAN) communication method in which apparatuses wirelessly communicate with each other directly without intervention of an external access point in WLAN communication will be generally explained. P2P (WLAN) communication can be implemented using a plurality of methods. For example, a communication apparatus supports a plurality of modes for P2P (WLAN) communication, and can execute P2P communication (WLAN) by selectively using any one of these modes.

As the P2P mode, the following two modes are assumed:
· soft AP mode
· Wi-Fi Direct (WFD) mode

A communication apparatus capable of executing P2P communication can be constituted to support at least either of these modes. However, even a communication apparatus capable of executing P2P communication need not support all these modes, and may be constituted to support only some of the modes.

A communication apparatus (for example, the mobile terminal device 104) having a WFD communication function accepts a user operation via the operation unit, and invokes an application for (in some cases, dedicated to) implementing the communication function. The communication apparatus can display a user interface (UI) screen provided by the application to prompt a user operation, and execute WFD communication based on a user operation accepted in response.

### ●Soft AP Mode

In the soft AP mode, a communication apparatus (for example, the mobile terminal device 104) operates as the role of a client that requests various services. The other communication apparatus (for example, the MFP 100) operates as a soft AP capable of executing a WLAN AP function by software setting. Note that commands and parameters transmitted/received when establishing wireless connection between the client and the soft AP suffice to be those defined by the Wi-Fi^{®} standard, so a description thereof will be omitted here. The MFP 100 operating in the soft AP mode decides, as a master station, a frequency band and a frequency channel. The MFP 100 can select which of 5 GHz and 2.4 GHz is used as a frequency band, and which frequency channel is used in the frequency band.

### ●WFD Mode

The MFP 100 may be statically activated as a master station in the WFD mode (Autonomous Group Owner). In this case, GO Negotiation processing for deciding a role becomes unnecessary. Also, in this case, the MFP 100 decides, as a master station, a frequency band and a frequency channel. The MFP 100 can select which of 5 GHz and 2.4 GHz is used as a frequency band, and which frequency channel is used in the frequency band.

### (Wireless Infrastructure Mode)

In the wireless infrastructure mode, communication apparatuses (for example, the mobile terminal device 104 and the MFP 100) that communicate with each other are connected to an external AP (for example, the AP 101) that controls the overall network, and communication between the communication apparatuses is performed via the AP. In other words, communication between the communication apparatuses is performed via a network constructed by an external AP. The mobile terminal device 104 and the MFP 100 respectively discover the AP 101, transmit connection requests to the AP 101, connect to the AP 101, and enable communication in the wireless infrastructure mode between these communication apparatuses via the AP 101. Note that a plurality of communication apparatuses may connect to separate APs. In this case, communication between the communication apparatuses becomes possible by transferring data between the APs. Commands and parameters transmitted/received in communication between communication apparatuses via an access point suffice to be those defined by the Wi-Fi^{®} standard, so a description thereof will be omitted here. In this case, the AP 101 decides a frequency band and a frequency channel. The AP 101 can select which of 5 GHz, 2.4 GHz, and 6 GHz is used as a frequency band, and which frequency channel is used in the frequency band.

### (Processing Corresponding to Connection Destination Change Request from AP to STA)

The mobile terminal device 104 and the MFP 100 comply with a function released to the public as Wi-Fi Agile Multiband^{®}. Wi-Fi Agile Multiband is a function of enabling selection of an optimal environment in accordance with a situation in which a Wi-Fi network changes. More specifically, STAs, such as the mobile terminal device 104 and the MFP 100, and Aps, such as the AP 101, exchange information about a network environment using the IEEE802.11 series communication standard. By this information exchange, when a network is congested, the AP can induce (change the connection destination) the STA to another AP, frequency band, channel, or in some cases, another cellular service.

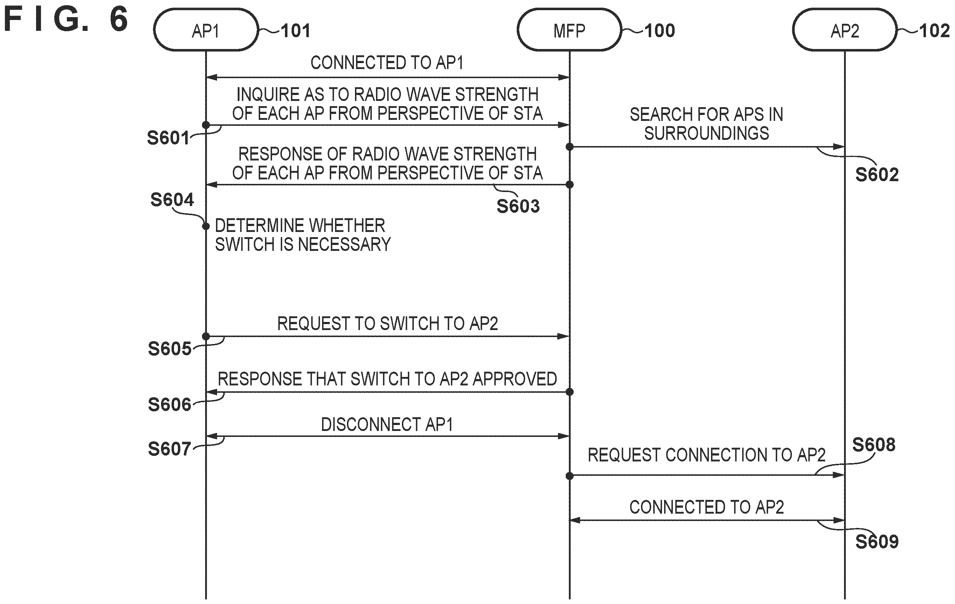

Fig. 6 is a sequence chart when the MFP 100 changes the connection destination AP from the AP 101 to the AP 102 in accordance with a connection destination change request from the AP 101. Processing executed by each apparatus in this sequence is implemented by reading out various programs stored in the memory of each apparatus, such as a ROM to a RAM, and executing them by the CPU of each apparatus.

In the initial state of the processing in Fig. 6, assume that the MFP 100 establishes connection with the AP 101 in the wireless infrastructure mode. When the MFP 100 and the AP 101 connect to each other in the wireless infrastructure mode, the AP 101 obtains information of whether the MFP 100 complies with IEEE802.11v. If the AP 101 obtains information representing that the MFP 100 complies with IEEE802.11v, the following processing is performed.

In S601, the AP 101 transmits, to the MFP 100, an inquiry (measurement requests) about the radio field intensities of APs around the MFP 100. This inquiry can be transmitted including a beacon frame request or a beacon report request. That is, this request can use a mechanism defined by the IEEE802.11k standard.

In S602, the MFP 100 receives frames transmitted from the surrounding APs in accordance with the request received in S601, and measures radio field intensities. Hence, the radio field intensities of the respective APs including the APs 101 and 102 are measured.

In S603, the MFP 100 transmits, as a response to the request received in S601, a list of the radio field intensities of the APs around the MFP 100 that are measured in S602. Note that the radio field intensity as a response may be information saved in the RAM 214 or nonvolatile memory 215 of the MFP 100, in addition to or instead of the information measured in S602. This response is transmitted including a Beacon Report or measurement reports.

In S604, the AP 101 determines, based on the congestion status within a network grasped by the AP 101 and the radio field intensities received from the MFP 100 in S603, whether the connection destination of the MFP 100 needs to be switched. Factors with which the AP 101 determines that the connection needs to be switched are, for example, many connected STAs, a large communication amount, less congestion of another AP, the presence/absence of an interference radio wave, and the stop of the AP function. If it is determined that the connection destination of the MFP 100 needs to be switched, and the SSID, channel, and frequency band of another AP designated as the switching destination of the MFP 100 are decided, the process advances to S605.

In S605, the AP 101 transmits an AP change request (connection destination switching request) to the MFP 100. The connection destination change request includes information of the SSID, channel, and frequency band of another AP designated as the switching destination of the MFP 100, which are decided in S604. Note that a plurality of SSIDs may be designated. The connection destination change request is transmitted as, for example, a BTM Request. That is, a BSS Transition Management (BTM) Request frame defined by the IEEE802. 1 1v standard is transmitted. In the example of Fig. 6, assume that the AP 102 is designated as a switching destination included in the connection destination change request.

In S606, if the MFP 100 complies with the connection destination change request received in S605, it transmits, to the AP 101, a response representing approval of switching. If MFP 100 does not comply with the connection destination change request, it may transmit rejection of switching as a response. The response is transmitted as a BTM Response. In the example of Fig. 6, assume that a response representing approval of switching is transmitted.

In S607, the AP 101 and the MFP 100 cancel connection in the wireless infrastructure mode.

In S608, the MFP 100 transmits a connection request to the AP 102 so as to connect to the AP 102 designated by the connection destination change request received in S605.

In S609, therefore, connection between the MFP 100 and the AP 102 in the wireless infrastructure mode is established.

With this mechanism, the MFP 100 serving as a STA can change the connection destination from the AP 101 to the AP 102 based on the connection destination change request from the originally connected AP 101. The APs 101 and 102 may be APs installed in different places. That is, by the processing of Fig. 6, the MFP 100 can switch to another AP installed at a position different from that of the originally connected AP. APs sometimes correspond to different frequency bands out of a plurality of frequency bands (two or three of 2.4-, 5-, and 6-GHz bands) provided by an identical device. That is, by the processing of Fig. 6, the MFP 100 can switch to another frequency band provided by an apparatus identical to the originally connected AP. For example, the connection destination can be changed to a 6-GHz band AP based on the connection destination change request.

Note that in the embodiment, an example in which a measurement request and connection destination change request from an AP are transmitted by a mechanism compliant with Wi-Fi Agile Multiband, and a STA responds to them, but some embodiments are not limited to this. The embodiment is applicable to a case where a STA responds to a measurement request and connection destination change request transmitted from an AP using a mechanism different from the above-described example, and changes a connection destination AP (switching, deletion, or addition of an AP serving as a connection destination).

### [First Embodiment]

### (Control on Connection Destination Change Request from AP)

A STA takes a state in which no problem occurs even upon switching an AP, and a state in which a problem occurs upon switching an AP or disconnection from a connected AP. If the STA receives an AP change request from the AP and switches the connection destination AP in accordance with the request in the state in which a problem occurs, a problem occurs in the STA. If the STA does not meet the AP change request in order to avoid generation of a problem, it may be disconnected from the connected AP. Even at this time, a problem occurs in the STA.

For example, as a technique for reducing power consumption of the STA itself, there are some STAs in which, when a state in which the STA is not used continues for a predetermined time, the operation clock of a processing CPU in the STA is decreased in accordance with the power mode, or the processing CPU is switched to a sub-CPU of a low operation clock, thereby reducing power consumption. When the connection destination AP is switched in accordance with a request from the AP in the underclocking state of the STA in the power saving mode, a time-out occurs on the connection destination AP side in connection processing with the connection destination AP accompanied by a heavy calculation load of Wi-Fi Protected Access-Extensible Authentication Protocol (WPA-EAP), and the connection with the AP may be canceled. According to the embodiment, the connection destination AP can be properly switched in accordance with the state of a MFP 100.

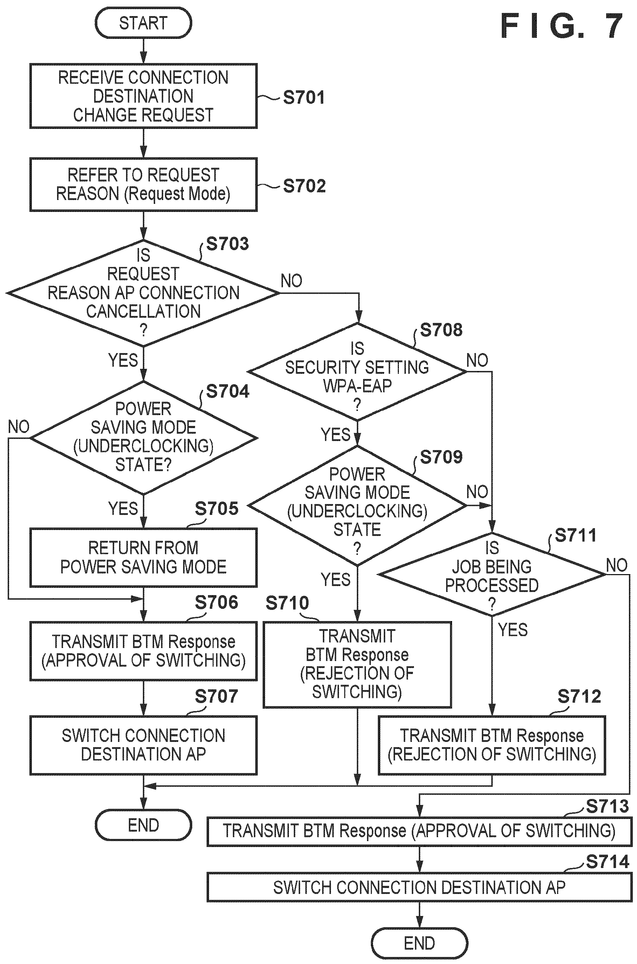

Next, control of the MFP 100 with respect to a connection destination AP change request from an AP 101 will be explained with reference to the flowchart of Fig. 7. Each step shown in the flowchart of Fig. 7 is implemented by deploying a control program stored in a computer readable memory, such as a ROM 213 to a RAM 214, and executing it by a CPU 212.

In step S701, the CPU 212 receives a connection destination AP change request from the AP 101. In step S702, the CPU 212 refers to a request reason (Request Mode) included in the connection destination AP change request from the AP 101. The request reason is referred to at the following bits included in the change request:
· Preferred Candidate List Included bit representing whether a transition candidate list is included in a BTM Request frame
· Abridged Bit representing the presence/absence of an AP recommended by the STA in the transition candidate list
· Disassociation Imminent Bit representing whether to cancel connection with the current AP
· BSS Termination Included Bit representing whether to shut down a Basic Service Set (BSS) and cancel connection with the AP
· ESS Disassociation Imminent Bit representing that a session information URL field is included in a BTM Request frame and the STA is disconnected from the ESS

In step S703, the CPU 212 determines whether the request reason represents cancellation of connection with the AP 101. For example, when Disassociation Imminent Bit representing whether to cancel connection with the current AP is set, or BSS Termination Included Bit representing whether to shut down a BSS and cancel connection with the AP is set, the CPU 212 determines whether cancellation of connection with the AP 101 is represented. If the CPU 212 determines that cancellation of connection between the AP 101 and the MFP 100 is represented, it advances to step S704. If the CPU 212 determines that cancellation of connection with the AP 101 is not represented, it advances to step S708.

In step S704, the CPU 212 determines whether the MFP 100 operates in the power saving mode. The power saving mode is a state in which the MFP 100 operates at an operation clock frequency lower than that at the time of an operation in the normal mode. The state in which the operation clock frequency is lower than that at the time of an operation in the normal mode is implemented by decreasing the operation clock frequency of a processing CPU mounted in the MFP 100. When a plurality of processing CPUs, such as a main CPU of a high operation clock frequency and a sub-CPU of a low operation clock frequency, are mounted in the MFP 100, the state may be implemented by switching the processing CPU to the sub-CPU of a low operation clock frequency.

In other words, the power saving mode is a mode in which the number of fed blocks is smaller than that at the time of an operation in the normal mode. For example, when a state in which power is fed to all blocks in the MFP 100 in Fig. 2B is regarded as an operation in the normal mode, the power saving mode is a state in which feeding to a reading control unit 217, a reading unit 219, a printing unit 222, and a printing control unit 224 is stopped.

If the CPU 212 determines in step S704 that the MFP 100 operates in the power saving mode, it advances to step S705. In step S705, the CPU 212 returns the MFP 100 from the power saving mode. The return from the power saving mode is implemented by changing the operation clock frequency of the processing CPU to an operation clock frequency at the time of an operation in the normal mode, or switching the processing CPU to the main CPU used at the time of an operation in the normal mode. If the CPU 212 determines in step S704 that the MFP 100 does not operate in the power saving mode, it advances to step S706. By the processing in step S705, the MFP 100 can shift to a state in which switching of the connection destination AP can be executed.

As described above, according to the embodiment, even when the MFP 100 is in the power saving state, if a request reason included in a connection destination AP change request is a predetermined reason, for example, a reason corresponding to cancellation of connection with the AP 101, the connection destination AP is switched.

The CPU 212 transmits a response representing approval of switching to the AP 101 in step S706, and switches the connection destination AP to the AP 102 in step S707.

After executing step S707, the CPU 212 shifts the MFP 100 to the power saving mode. The shift to the power saving mode is implemented by changing the operation clock frequency of the processing CPU to an operation clock frequency at the time of an operation in the power saving mode, or switching the processing CPU to the sub-CPU used at the time of an operation in the power saving mode.

In step S708, the CPU 212 determines whether the security setting of wireless communication during connection is Wi-Fi Protected Access Extensible Authentication Protocol (WPA-EAP). If the CPU 212 determines that the security setting is WPA-EAP (first setting), it advances to step S709. If the CPU 212 determines that the security setting is not WPA-EAP (second setting different from the first setting), it advances to step S711. Note that in the embodiment, WPA-EAP has been exemplified, but the determination criterion may be another security setting in which a time-out may occur in encryption processing based on the operation clock frequency of the processing CPU in the power saving mode.

In step S709, similar to step S704, the CPU 212 determines whether the MFP 100 operates in the power saving mode. If the CPU 212 determines in step S709 that the 100 operates in the power saving mode, it advances to step S710. In step S710, the CPU 212 transmits, to the AP 101, a response representing rejection of switching of the connection destination AP, and maintains the connection with the AP 101. After step S710, the CPU 212 ends the processing in Fig. 7. If the CPU 212 determines in step S709 that the 100 does not operate in the power saving mode, it advances to step S711.

In this manner, when the connection destination AP change request received from the AP 101 does not represent cancellation of connection between the AP 101 and the MFP 100, and encryption processing is accompanied by heavy calculation processing, rejection of switching of the connection destination AP is sent back as a response as long as the MFP 100 operates in the power saving mode. This can prevent a time-out in the case of an operation in the power saving mode between the MFP 100 and a connection destination AP after switching (AP after change).

In step S711, the CPU 212 determines whether a print job is being processed. If the CPU 212 determines that a print job is being processed, it advances to step S712. If the CPU 212 determines that a print job is not being processed, it advances to step S713. In step S712, the CPU 212 transmits, to the AP 101, a response representing rejection of switching of the connection destination AP, and maintains the connection with the AP 101. After step S712, the CPU 212 ends the processing in Fig. 7.

As described above, when the connection destination AP change request received from the AP 101 does not represent cancellation of connection between the AP 101 and the MFP 100, rejection of switching of the connection destination AP is sent back as a response if a print job is being executed. This can prevent a situation in which print data is interrupted. Although a print job is exemplified in this example, it may be determined whether another job, such as a scan job, is being processed.

In step S713, the CPU 212 transmits, to the AP 101, a response representing approval of switching of the connection destination AP. In step S714, the CPU 212 switches the connection destination AP to the AP 102. After step S714, the CPU 212 ends the processing in Fig. 7.

In the embodiment, when the connection destination AP change request received from the AP 101 does not represent cancellation of connection between the AP 101 and the MFP 100, the MFP 100 operates so that approval of switching of the connection destination AP is sent back as a response as much as possible. In other words, when the current state of the MFP 100 satisfies a predetermined condition, the connection destination AP is not switched. The predetermined condition is that, for example, the security setting is WPA-EAP, the MFP 100 is in the power saving mode, and a job is being processed.

Note that when the process advances from NO in step S708 to NO in step S711, the MFP 100 may be in the power saving mode. Thus, before step S713, the same processing as that in steps S704 and S705 may be executed. With this procedure, when the MFP 100 is in the power saving mode, it can be constituted to perform switching of the connection destination AP in step S714 after return from the power saving mode. After executing step S714, the CPU 212 shifts the MFP 100 to the power saving mode. The shift to the power saving mode is implemented by changing the operation clock frequency of the processing CPU to an operation clock frequency at the time of an operation in the power saving mode, or switching the processing CPU to the sub-CPU used at the time of an operation in the power saving mode.

### [Second Embodiment]

The second embodiment will be described in regard to a difference from the first embodiment. In the first embodiment, when it is determined in step S709 that the MFP 100 is in the power saving mode, a response representing rejection of switching of the connection destination AP is transmitted to the AP 101 in step S710 to maintain the power saving mode. In the second embodiment, when a MFP 100 satisfies a predetermined condition and shifts to the power saving mode, it is controlled not to transmit a connection destination AP change request from an AP 101 to the MFP 100. With this arrangement, when the MFP 100 shifts to the power saving mode, the power saving mode can be maintained without switching the connection destination AP.

As the predetermined condition to shift to the power saving mode, for example, assume that it is set not to accept an operation on an operation display unit 220 for a predetermined time. In this case, first, a CPU 212 cancels connection with the AP 101 based on the fact that the condition is satisfied, and transmits again, to the AP 101, a request of connection with the AP 101. At this time, the CPU 212 transmits, to the AP 101, information representing that the MFP 100 does not comply with IEEE802.11v. Here, even if the MFP 100 complies with IEEE802.11v in actual, information representing that the MFP 100 does not comply with this standard is transmitted to the AP 101. Then, the CPU 212 shifts the MFP 100 to the power saving mode. The shift to the power saving mode is implemented by changing the operation clock frequency of the processing CPU to an operation clock frequency at the time of an operation in the power saving mode, or switching the processing CPU to the sub-CPU used at the time of an operation in the power saving mode. By this operation, it can be controlled not to transmit a connection destination AP change request from the AP 101.

Based on the fact that the condition of return from the power saving mode is satisfied, the CPU 212 returns the MFP 100 from the power saving mode. The condition of return from the power saving mode is, for example, acceptance of a user operation on the operation display unit 220. The return from the power saving mode is implemented by changing the operation clock frequency of the processing CPU to an operation clock frequency at the time of an operation in the normal mode, or switching the processing CPU to the main CPU used at the time of an operation in the normal mode. Then, the CPU 212 cancels connection with the AP 101 and transmits, to the AP 101, a request of connection with the AP 101. At this time, the CPU 212 transmits, to the AP 101, information representing that the MFP 100 complies with IEEE802. 11v.

In this fashion, when the MFP 100 satisfies a predetermined condition and shifts to the power saving mode, it is controlled not to transmit a connection destination AP change request from the AP 101 to the MFP 100. With this arrangement, when the MFP 100 shifts to the power saving mode, the power saving mode can be maintained without switching the connection destination AP.

In the above-described second embodiment, an example has been explained in which when shifting to the power saving mode, connection with an AP is performed again, and information representing that the connection destination change function is not supported (IEEE802. 1 1v is not complied with) is transmitted to the AP to connect to the AP so as to prevent change of the connection destination corresponding to a connection destination change request. However, some embodiments are not limited to this, and another method may be adopted as long as it can be controlled to suppress change of the connection destination AP corresponding to a connection destination change request from the AP in the power saving mode. For example, it may be controlled that information representing that the connection destination change function is supported is transmitted to an AP at the time of connection with the AP, but when a measurement request (S601) is received, information representing a radio wave reception situation inferior to an actually measured situation (radio wave is weak, noise is large, or no radio wave can be detected) is sent back as a response (false response) as for the radio wave reception situation of another AP other than the connected access point. By this control, it can be expected to suppress transmission of a request of change of the connection destination to another AP from the connected AP. Therefore, change of the connection destination corresponding to a connection destination change request is suppressed.

Note that various control operations described above that are performed by the MFP 100 in the above-described embodiments may be performed by one hardware, or control of the overall apparatus may be performed by sharing processing between a plurality of hardware units (for example, a plurality of processors or circuits).

Although the present disclosure has described example embodiments in detail, some embodiments are not limited to these specific embodiments, and also includes various forms without departing from the spirit and scope of the disclosure. Further, the above-described embodiments are merely embodiments of the present disclosure, and can be properly combined.

In the above-described embodiments, an example in which the present disclosure is applied to the MFP 100 has been described. However, some embodiments are not limited to this example, and is applicable to a wireless device that has a plurality of operation modes and functions as a STA capable of processing corresponding to a connection destination change request from an AP. That is, the present disclosure is applicable to a personal computer, a PDA, a tablet terminal, a mobile phone terminal, such as a smartphone, a music player, a game device, an electronic book reader, a smartwatch, and various measurement devices (sensor devices), such as a thermometer and a hygrometer. The present disclosure is applicable to digital cameras (including a still camera, a video camera, a network camera, and a security camera), a printer, a scanner, and a drone. The present disclosure is applicable to a video output device, an audio output device (for example, a smart speaker), a media streaming player, and a wireless LAN slave device (adaptor) capable of connecting to a USB terminal or a LAN capable terminal. The video output device includes a device that implements streaming playback on a display device by obtaining (downloading) a movie on the Internet specified by a URL designated from an electronic device and outputting it to the display device connected via a video output terminal, such as HDMI^{®}, and a device that implements mirroring display (display in which contents displayed on an electronic device are also displayed on a display device). The video output device also includes media players, such as a television, a hard disk recorder, a Blu-ray recorder, and a DVD recorder, a head-mounted display, a projector, a television, a display device (monitor), and a signage device. The present disclosure is applicable to even Wi-Fi connectable devices called smart home appliances, such as an air conditioner, a refrigerator, a washing machine, a cleaner, an oven, a microwave oven, lighting equipment, a heating appliance, and cooling equipment.

Note that in the above-described embodiments, an example in which a STA (for example, the MFP 100) changes the connection destination AP based on a connection destination change request received from a connected AP (for example, the AP 101) has been explained. It may also be controlled that even if the STA does not receive the connection destination change request from the AP, and if the STA satisfies a specific switching condition, the STA voluntarily determines to switch the connection destination AP, and switches the connection destination AP. The specific switching condition is, for example, a decrease in radio field intensity of the connected AP. For example, the radio field intensity of the connected AP is measured, and if a predetermined condition representing that the radio field intensity of the connected AP becomes weak is satisfied, the STA voluntarily determines to switch the connection destination AP. The predetermined condition is that, for example, the radio field intensity of the connected AP becomes lower than a threshold, the state in which the radio field intensity of the connected AP becomes lower than the threshold continues for a predetermined time, or the average of the radio field intensity of the connected AP in a specific period becomes lower than a threshold. When the STA determines to switch the connection destination AP, it searches for APs (AP search), and decides, as a switching target AP serving as a connection destination after switching, an AP different from the currently connected AP out of APs detected by AP search, cancels connection with the connected AP, and switches the connection destination to the switching target AP. Alternatively, an AP after switching may be added and connected without canceling connection with the connected AP. Even such voluntary switching control of the connection destination AP by the STA may be suppressed based on a condition similar to that of switching of the connection destination AP based on a change request described above. More specifically, even if the above-described specific switching condition is satisfied, it is controlled not to perform switching (change) of the connection destination AP in the power saving mode, or to suppress switching (change) of the connection destination AP.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electronic device comprising:
reception means configured to receive a change request of an access point serving as a connection destination from a connected first access point; and
control means configured to control, in a case where the electronic device is in a first mode, out of the first mode and a second mode in which a clock frequency of the at least one processor is lower than in the first mode, to perform connection destination change processing based on the change request, and
in a case where the electronic device is in the second mode, not to perform the connection destination change processing based on the change request.

2. The device according to claim 1, wherein the control means controls, in a case where the electronic device is in the first mode and the change request is received, to perform the connection destination change processing based on the change request, and
in a case where the electronic device is in the second mode and the change request is received, not to perform the connection destination change processing based on the change request.

3. The device according to claim 1, wherein in a case where the electronic device is in the second mode, the control means controls not to perform the connection destination change processing based on the change request by performing specific processing of suppressing, in the second mode, transmission of the change request from the first access point.

4. The device according to claim 3, wherein in a case where the electronic device is shifted from the first mode to the second mode, the control means controls to, as the specific processing, cancel connection with the first access point, connect again to the first access point, and announce, together with the connection, that the electronic device does not meet the change request of the connection destination.

5. The device according to claim 3 or 4, wherein in the second mode, the control means controls to, as the specific processing, respond to a measurement request received from the first access point by information representing that a radio wave situation is inferior to a measured situation in regard to another access point except the first access point.

6. The device according to claim 1 or 2, wherein the control means controls not to perform the connection destination change processing based on the change request in a case where the electronic device is in the second mode and a setting about connection with a second access point serving as a connection destination after change based on the change request is a first setting, and
controls to perform the connection destination change processing based on the change request in a case where the electronic device is in the second mode but the setting about connection with the second access point is a second setting different from the first setting.

7. The device according to claim 6, wherein the first setting is a setting using predetermined encryption processing in the connection with the second access point.

8. The device according to claim 7, wherein the predetermined encryption processing is Wi-Fi Protected Access-Extensible Authentication Protocol (WPA-EAP).

9. The device according to claim 1 or 2, wherein in a case where the electronic device is in the first mode but in a predetermined state, the control means controls not to perform the connection destination change processing based on the change request.

10. The device according to claim 9, wherein the predetermined state includes a state in which a job is being executed.

11. The device according to claim 1 or 2, wherein in a case where the electronic device is in the second mode, but information representing a reason of change of the connection destination included in the change request received by the reception means represents a predetermined reason, the control means controls to perform the connection destination change processing based on the change request.

12. The device according to claim 11, wherein the predetermined reason is a reason corresponding to cancellation of connection between the access point and the electronic device.

13. The device according to claim 11 or 12, wherein in a case where the change request including information representing the predetermined reason is received in the second mode, the control means controls to shift the electronic device from the second mode to the first mode, and then perform the connection destination change processing based on the change request.

14. The device according to claim 13, wherein in a case where the change request including information representing the predetermined reason is received in the second mode, the control means controls to shift the electronic device from the second mode to the first mode, perform the connection destination change processing based on the change request, and then shift the electronic device from the first mode to the second mode.

15. The device according to any one of claims 1 to 14, wherein the second mode is a power saving mode in which power consumption is lower than in the first mode.

16. The device according to any one of claims 1 to 15, wherein the electronic device further comprises a printer configured to print an image on a print medium.

17. The device according to any one of claims 1 to 16, wherein the electronic device is a device capable of an operation corresponding to at least one of Orthogonal Frequency-Division Multiple Access (OFDMA) and Target Wake Time (TWT).

18. The device according to any one of claims 1 to 17, wherein the electronic device is a device capable of an operation complying with IEEE802.11ax.

19. The device according to any one of claims 1 to 18, wherein in a case where the control means controls to perform change of the connection destination based on the change request, the control means controls to change to an access point of a 6-GHz frequency band.

20. An electronic device control method executed in an electronic device including at least one processor, the method comprising:
receiving a change request of an access point serving as a connection destination from a connected first access point;
in a case where the electronic device is in a first mode, out of the first mode and a second mode in which a clock frequency of the at least one processor is lower than in the first mode, controlling to perform connection destination change processing based on the change request; and
in a case where the electronic device is in the second mode, controlling not to perform the connection destination change processing based on the change request.

21. A program configured to cause a computer to function to:
receive a change request of an access point serving as a connection destination from a connected first access point; and
control, in a case where the electronic device is in a first mode, out of the first mode and a second mode in which a clock frequency of the at least one processor is lower than in the first mode, to perform connection destination change processing based on the change request, and
in a case where the electronic device is in the second mode, not to perform the connection destination change processing based on the change request.

22. A non-transitory computer-readable storage medium storing a program configured to cause a computer to function to:
receive a change request of an access point serving as a connection destination from a connected first access point; and
control, in a case where the electronic device is in a first mode, out of the first mode and a second mode in which a clock frequency of the at least one processor is lower than in the first mode, to perform connection destination change processing based on the change request, and
in a case where the electronic device is in the second mode, not to perform the connection destination change processing based on the change request.
